# EUROPEAN PATENT SPECIFICATION

(11) **EP 2 823 221 B1**
(45) Date of publication and mention of the grant of the patent: **24.02.2021**
(21) Application number: 13711730.5
(22) Date of filing: 08.03.2013
(51) Int. Cl.: F21V 8/00

(54) **LIGHTING PANEL AND METHOD OF PRODUCING A LIGHTING PANEL**
LEUCHTTAFEL UND VERFAHREN ZUR HERSTELLUNG EINER LEUCHTTAFEL
PANNEAU D'ÉCLAIRAGE ET PROCÉDÉ DE PRODUCTION D'UN PANNEAU D'ÉCLAIRAGE

(30) Priority: 09.03.2012 GB 201204167
(43) Date of publication of application: 14.01.2015
(73) Proprietor: Design LED Products Limited, Livingston, West Lothian EH54 7GA (GB)
(72) Inventor: GOURLAY, James, Livingston Lothian EH54 7GA (GB)
(74) Representative: Lincoln IP
(86) International application number: PCT/GB2013/050584
(87) International publication number: WO 2013/132271

(56) References cited:
- EP-A1- 1 867 916
- WO-A1-2007/138294
- GB-A- 2 454 928
- GB-A- 2 474 298
- GB-A- 2 475 738

## Description

The present invention relates to the field of lighting panels. In particular, a lighting panel device for illumination, lighting and display purposes is described that exhibits a light output having a definable narrow beam profile and definable beam angle.

Light Emitting Diodes (LEDs) are high efficacy and highly reliable examples of solid state light sources. As the cost benefits of solid state lighting improve, this technology is gradually replacing older lighting technologies, such as fluorescent lamps, in a wide variety of professional and consumer applications. LEDs are comparatively small sources of light and therefore generally employ external optics to provide a useful lighting system. It is important that the external optics, in conjunction with the performance specification of the LED, provides the desired function with a high optical efficiency. A high optical efficiency is needed so as to minimise cost (both unit and running), to minimise heat dissipation and to maximise energy efficiency credentials.

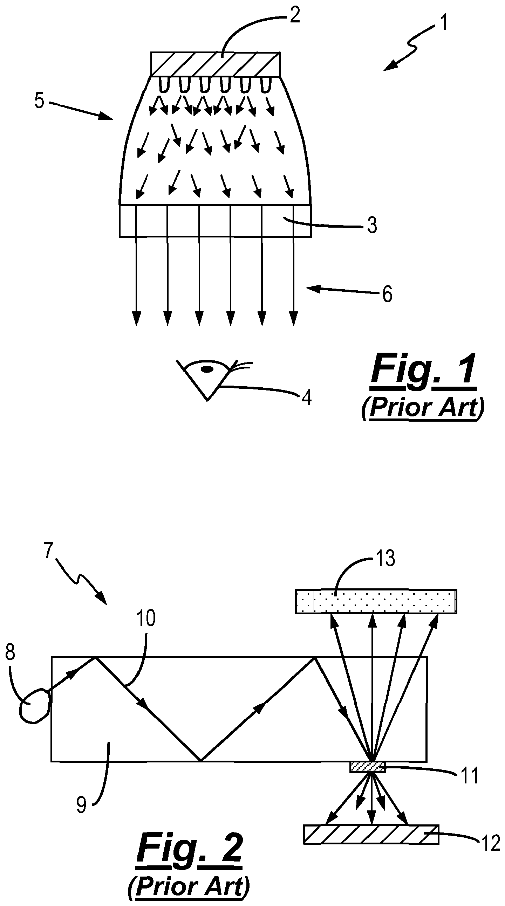

It is known to employ LEDs within a spot light type system so as to provide an output that exhibits a narrow profile and which has a definable beam angle. An example of such a system is presented schematically in Figure 1, as represented generally by reference numeral 1. The LED spot light system 1 can be seen to comprise a cluster of LEDs 2 and a lens structure 3 arranged such that it lies between the cluster of LEDs 2 and an observer 4. Typically, the lens structure 3 is placed at some distance from the cluster of LEDs 2 so as to provide a means for collecting the light 5 from all of the LEDs in the cluster 2 and projecting this light forward in a narrow and well defined beam 6. The system is then orientated (or pointed) as a whole such that the narrow defined beam 6 is delivered to a desired location. A disadvantage of this described configuration is that such systems tend to be large, bulky system that exhibit depths of many centimetres.

Another more recent approach to LED lighting is to couple the LEDs to light-guide plates. This is used to give a thin luminaire panel with a large area of diffuse lighting. Examples of such devices are provided by the inventor within PCT Publication No. WO 2005/101070 and presented schematically in Figure 2, as generally represented by reference numeral 7. Here a light source 8 is edge-coupled into a planar light guide 9. The light 10 generated by the light source 8 then propagates within the planar light-guide 9 due to the effects of total internal reflection. Extraction features 11 e.g. bumps, indents, grooves, ink dots or lines on the surface of the planar light guide 9 then enable the light 10 to escape the total internal reflection condition. A reflector 12 and diffuser 13 may also be incorporated so as to provide a means for further manipulating the light 10. The overall effect of this arrangement is that the planer light guide 9 transforms the point sources of light, namely the LEDs 8, into a diffuse area of illumination.

Commercially available examples of such systems may typically comprise 600mm x 600mm sized panels that have LEDs located around the four edges of a sheet of a polymer light-guide plate. In practice it is found that as a result of the design of these systems the light output generated exhibits a very wide beam angle - typically lambertian (120° Full Width Half Maximum). These systems are well suited for many applications however their designs do exhibit a number of limitations which makes them unsuitable for other types of applications.

In the first instance the optical coupling losses between the LEDs 8 and the light-guide edge, in combination with the large average optical path lengths of the light 10 within the absorbing transparent polymer of the panel 9, results in a system that exhibits significant optical loss. This optical loss impacts on the overall optical efficiency of the systems which is known to be as low as 50%.

The most common polymer material employed as the transparent light-guide plate 9 is acrylic (PMMA) due to this material having the highest optical transparency. However, compared with many other transparent materials (e.g. silicone), acrylic is not stable at high temperatures and high light power levels. Over time, the acrylic material is known to discolour and so light transmission is reduced. This is particularly evident in the areas closest to where the LEDs 8 are positioned, as they have the highest temperature and highest light power levels. These effects limit the working life-time of such products based on an acrylic light-guide. For lighting applications, where LEDs are promoted to have long life-times, this is a major disadvantage.

For applications where a particular beam angle distribution is required the wide, and usually lambertian, angular distribution of the output light provides further disadvantages. In such applications additional external films must be deployed, thus reducing further the optical efficiency, increasing production costs and providing general integration difficulties.

Further examples representing the state of the art are described in GB2474298 A, GB2475738 A, WO2007138294 A1, EP1867916 A1, and GB2454928 A.

### Summary of Invention

It is therefore an object of an aspect of the present invention to obviate or at least mitigate the foregoing disadvantages of the LED based light source systems known in the art.

A further aspect of an embodiment of the present invention is to provide an LED based lighting panel that exhibits a predetermined output beam angle.

In the following description the terms transparent refers to the optical properties of a component of the lighting panel at the wavelengths of the light generated by the LED light sources employed within the apparatus.

According to a first aspect of the present invention there is provided a lighting panel in accordance with claim 1.

The lighting panels effectively provide an alternative means for producing a "spot light" like illumination from an LED. Having the LED embedded within the devices also provides the added advantage of significantly improving the optical coupling of the light into the guide layer while allowing the overall thickness of the device to be reduced. Embedding the LED source also provides them with physical protection while allowing for improved thermal dissipation. The lighting panels therefore exhibit high optical efficiencies and long operating lifetimes.

The plurality of transparent prism structures extract the first and second light output from the lighting panel by disrupting internal reflection effects within the composite structure.

Preferably the plurality of transparent prism structures are configured to compress the light emitted from the LED. In this context compression means that the width of the first and second light outputs is narrower than the width of the light emitted from the LED.

Preferably the transparent coating is applied to the plurality of transparent prism structures so as to form a substantially planar surface. Having a substantially planar surface reduces the tendency for dirt or dust to settle on the exposed surface.

Optionally, the transparent coating comprises a spatial pattern e.g. lined or chequered patterns. The spatial pattern acts to providing two components to both the first and second output beams. The resulting light intensity distribution is therefore a superposition of these two components of the first and second output beams.

Optionally the lighting panel further comprises a reflector arranged so as to reflect the first light output back through the composite structure. In this embodiment the first light output is effectively combined with the second light output.

The reflector may comprise an array of apertures. The array of apertures may be a regular array of apertures. The apertures may comprise a regular geometrical shape e.g. they may be circular.

The reflector may comprise a transparent film and a plurality of patterned reflective or optical features. In this embodiment the reflector provides a means for controlling the proportion of light emitted within the first and second light outputs. It may also provide a means to further control the light beam profile and output angle of the first and second light outputs.

Optionally the lighting panel further comprises a second LED mounted upon the second surface of the transparent substrate such that light emitted from second LED is guiding through the composite structure in a separate direction to that of the light emitted by the first LED. In this embodiment the configuration of the plurality of transparent prism structures acts to extract a third and a fourth light output from the lighting panel.

Preferably the light emitted from second LED is guiding through the composite structure in an opposite direction to that of the light emitted by the first LED.

The transparent substrate preferably has a refractive index nₛ between 1.50 and 1.66.

The transparent prism structures preferably have a refractive index nₚ between 1.46 and 1.58.

The transparent guide layer preferably has a refractive index n_{g} between 1.46 and 1.56.

The transparent coating layer preferably has a refractive index n_{c} between 1.37 and 1.58.

Most preferably the refractive indices of the transparent substrate and the transparent prism structures are selected such that they satisfy the inequality nₛ ≥ nₚ.

Most preferably the refractive indices of the transparent substrate and the transparent guide layer are selected such that they satisfy the inequality nₛ ≥ n_{g}.

The refractive indices of the transparent prism structures and the transparent coating layer are selected such they satisfy the inequality nₚ > n_{c}.

According to a second aspect of the present invention there is provided a method of producing a lighting panel in accordance with claim 11.

Preferably the transparent coating is applied to the plurality of transparent prism structures so as to form a substantially planar surface.

Optionally the method of producing a lighting panel further comprises arranging a reflector so as to reflect the first light output back through the composite structure.

Optionally the method of producing a lighting panel further comprises mounting a second LED mounted upon the second surface of the transparent substrate such that light emitted from the second LED is guided through the composite structure in a separate direction to that of the light emitted by the first LED.

Preferably the second LED is mounted upon the second surface of the transparent substrate such that light emitted from the second LED is guided through the composite structure in an opposite direction to that of the light emitted by the first LED.

Embodiments of the second aspect of the invention may comprise features to implement the preferred or optional features of the first aspect of the invention or vice versa.

### Brief Description of Drawings

Aspects and advantages of the present invention will become apparent upon reading the following detailed description and upon reference to the following drawings in which: The examples of figures 3, 5, 6 and 10 are not according to the invention and are present for illustration purposes only.
Figure 1 presents a schematic representation of an LED spot light type system as known in the art;
Figure 2 presents a side view of an LED based lighting panel as known in the art;
Figure 3 presents a side view of a lighting panel in accordance with the disclosure;
Figure 4 presents a beam profile measurement for the lighting panel of Figure 3.
Figure 5 presents
   (a) a side view of the lighting panel of Figure 3 incorporating a reflective layer on the side of the prisms structures; and
   (b) a top view of an alternative example of the reflector;
Figure 6 presents a side view of a lighting panel in accordance with an example;
Figure 7 presents a representation of the light output of the lighting panel of Figure 6;
Figure 8 presents
   (a) a side view of the lighting panel of Figure 3 incorporating a coating on the prisms;
   (b) A top view of an alternative embodiment of the coating;
Figure 9 presents a beam profile measurement taken from the lighting panels presented in Figure 3 and Figure 8; and
Figure 10 presents a top view of a lighting panel in accordance with an alternative example of the present invention.

In the description which follows, like parts are marked throughout the specification and drawings with the same reference numerals. The drawings are not necessarily to scale and the proportions of certain parts have been exaggerated to better illustrate details and features of embodiments of the invention.

### Detailed Description

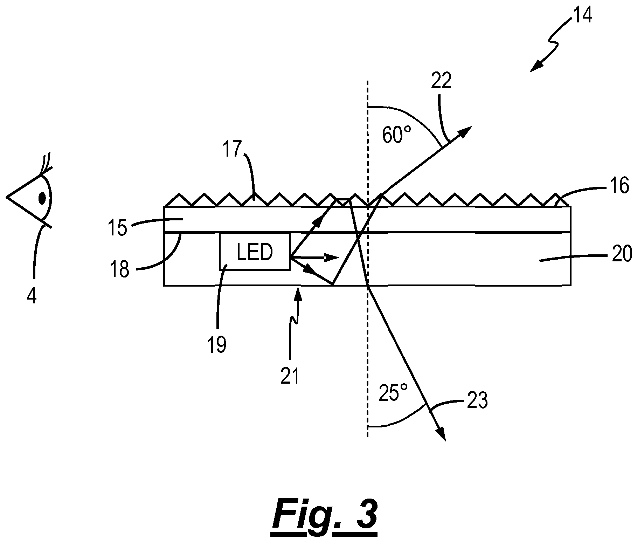

Note that the examples of figures 3, 5, 6 and 10 are not according to the invention and are present for illustration purposes only.

Referring initially to Figure 3, a side view of a lighting panel 14 in accordance with the disclosure is shown. The lighting panel 14 can be seen to comprise a substrate 15 made from a transparent polymer sheet, such as polyester or polycarbonate, and having a refractive index nₛ between 1.50 and 1.66.

Located on a first surface 16 of the transparent substrate 15, is an array of 90° prism structures 17, also formed from a transparent plastic polymer and having a refractive index nₚ between 1.46 and 1.58. The refractive indices of the transparent substrate 15 and the transparent prism structures 17 are selected such that they satisfy the inequality nₛ ≥ nₚ.

The substrate 15 and the prism structures 17 can be provided as a single commercial product, a Vikuiti™ brightness enhancement film (BEF III) being an example of such a product employed within the presently described example. In this product the substrate has a thickness of approximately 127 microns while the prism structures 17 have a thickness of approximately 28 microns. The refractive index nₛ of the substrate 15 is selected to be 1.61 while the refractive index nₚ of the prism structures 17 is chosen to be 1.58.

Located on a second surface 18 of the substrate 15, the second surface 18 being opposite the first surface 16, is a side emitting LED 19 whose output has a lambertian distribution (120° full width half maximum), a Nichia® 206 LED being an example of a suitable LED device. Electrical tracking (not shown in Figure 3) is located on the second surface 18 of the substrate 15, and provides a means for supplying electrical power to the LED 19, as and when appropriate. The LEDs may be bonded to the tracks on the second surface 18 of the substrate 15 in a standard manner known to those in the art.

Covering the LED 19 and the remaining area of the second surface 18 of the substrate 15 is a guide layer 20, also formed from a transparent plastic polymer, and having a refractive index n_{g} between 1.46 and 1.56. The refractive indices of the transparent substrate 15 and the transparent guide layer 20 are selected such that they satisfy the inequality nₛ ≥ n_{g}. In order to satisfy this inequality the presently described example employs a transparent guide layer 20 having a refractive index n_{g} of 1.51.

As a result of the above arrangement and choice of the refractive indices n_{g}, nₛ and nₚ light 21 generated by the LED 19 is initially coupled into the transparent guide layer 20, so as to propagate in a direction substantially parallel to a plane defined by the transparent substrate 15, as shown on Figure 3. The light is however permitted to propagate into the transparent substrate 15 and the prism structures 17, as is also shown in Figure 3.

When the light 21 interacts with the transparent prism structures 17, this acts to disrupt or overcome the effects of total internal reflection within the combined structure formed from between the transparent guide layer 20 and the transparent substrate 15. As a result, the light 21 is redirected so as to exit the lighting panel 14 via the transparent prism structures 17, as a first light output as depicted by reference numeral 22, or via the transparent guide layer 20, after propagating back through the transparent substrate 15 and the transparent guide layer 20, as a second light output as depicted by reference numeral 23.

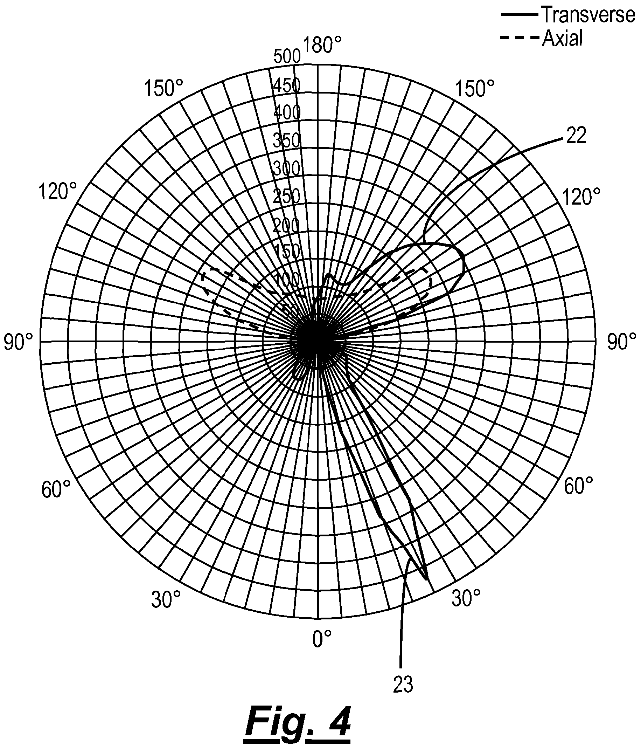

It is the form of the prism structures that determines the output angles and beam widths of the first 22 and second 23 light outputs. Indeed the presence of the prism structures 17 act to increase the on-axis brightness of the first 22 and second 23 light output beams by compressing the light into a narrower viewing angle. This compression of the light output beams 22 and 23 can clearly be seen within the transverse beam profile measurement (solid line) for the lighting panel 14 presented in Figure 4. As can be seen, the first light output beam 22 has a beam distribution which peaks at approximately 60° from a normal to the transparent substrate 15, has a full width half maximum of 30° and contains approximately 40% of the light exiting the device 14. By comparison, the second light output beam 23 has its peak at 25° from a normal to the exterior surface of the guide layer 20, exhibits a full width half maximum of 10° and contains approximately 60% of the light exiting the device.

Figure 4 also presents an axial beam profile measurement (dashed line) of the light output beams 22 and 23 i.e. this is the view of the light output beams 22 and 23 as seen by the observer 4.

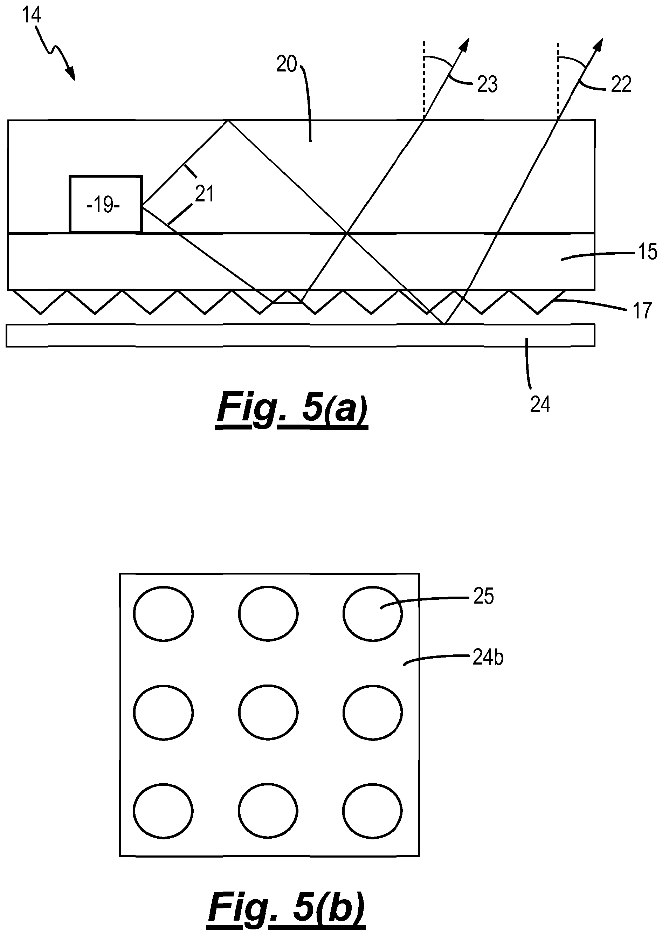

Figure 5(a) presents a side view of the lighting panel 14 of Figure 3, which now incorporates a reflector 24 located such that the transparent prism structures 17 lie between the reflective layer 24 and the transparent substrate 15. The reflector may comprise a specular or non-specular reflective material. The inclusion of the reflector 24 acts to reflect the first light output 22 from the lighting panel 14 back through the device via the prism structures 17, such that this light 22 then contributes to the previously described second light output 23.

It will be appreciated by those skilled in the art that the reflector 24 could be orientated on the opposite side of the lighting panel 14, to its position shown in Figure 5a. In this example, the reflector 24 acts to reflect the second light 23 output from the lighting panel 14, such that it passes back through the device, and then exits the device through the prism structures 17, so as to contribute to the previously described first light output 22.

A top view of an alternative reflector 24b is presented in Figure 5(b). The reflector 24b can be seen to comprise a 3x3 regular array of circular apertures 25 located across its surface area. The inclusion of these apertures provides a means for varying the proportion of light present within the light output beams 22 and 23 and on what side of the device they will be emitted. It will be appreciated by the skilled reader that the number, shape and alignment of the apertures can be altered. It is the combination of the size, number and relative arrangement of the apertures 25 which determine the proportion of light delivered outside the system on each side.

In a further example the reflector 24 or 24b may comprise a transparent film with patterned reflective or optical features to control the proportion of light or further control the light beam profile and angle. In particular, locating the features on or around the LED positions can provide a means for reducing the glare or so-called "sparkle" as viewed by an observer.

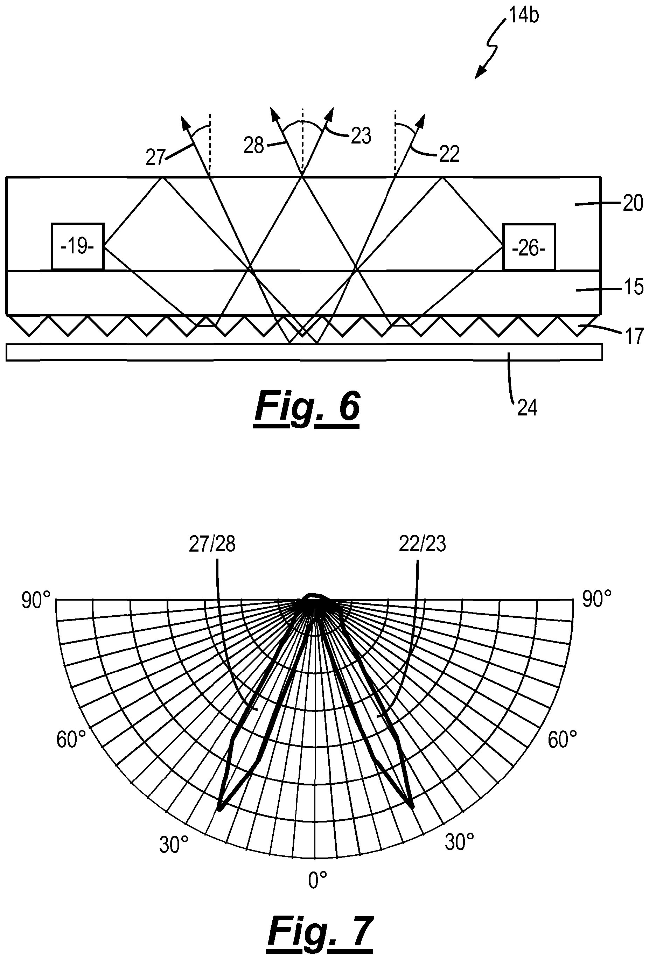

A further example of the lighting panel 14b is presented in Figure 6. This example is similar to that presented in Figure 5, however, instead of an LED 19 being located so as to propagate light in a single direction, a second LED 26 is located on the first surface 16 of the substrate 15, such that light now propagates in both directions through the lighting panel 14b. In this example, instead of just the light output 23 being generated by the lighting panel 14b, additional light outputs 27 and 28 are now present centred around -25° from the normal two light guide layer 20, and again exhibiting a full width half maximum of approximately 10°.

Further detail of the light output from the lighting panel 14b of Figure 6 is presented in Figure 7. As can be clearly seen, this figure shows that with LEDs directing light in both directions, the light exiting system has two peaks 23 and 27. This configuration is particularly useful for producing so-called "bat wing" distributions as is commonly required in luminaries for professional lighting applications.

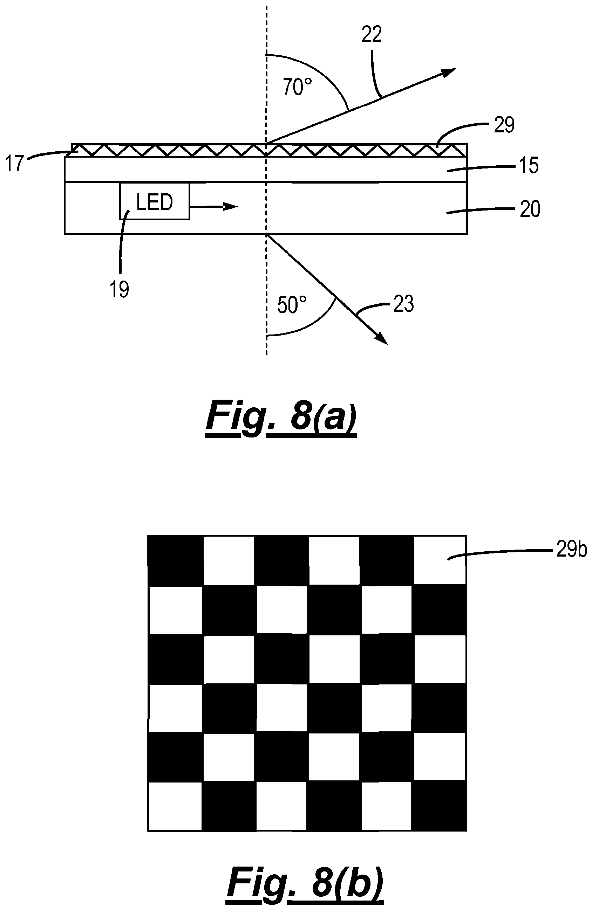

The ability to further control the output beam angle of the light outputs 22, 23 and 27 from the lighting panels 10 and 14b will now be described with reference to Figure 8. In particular Figure 8(a) presents a lighting panel 14c similar to that presented in Figure 3, however in the presently described embodiment, a transparent coating layer 29 has been applied to the external surface of the transparent prism structures 17. The coating layer 29 is again made from a transparent polymer, such as silicone, polyurethane or acrylic and has a refractive index n_{c} between 1.37 and 1.47. The refractive indices of the transparent prism structures 17 and the transparent coating layer 29 are selected such they satisfy the inequality nₚ > n_{c}. As a result, and as shown in Figure 8(a), light 21 generated by the LED 19 can propagate through the lighting panel 14c and into the coating layer 29. In the presently described embodiment the refractive index of the coating layer 29 is selected to be 1.42.

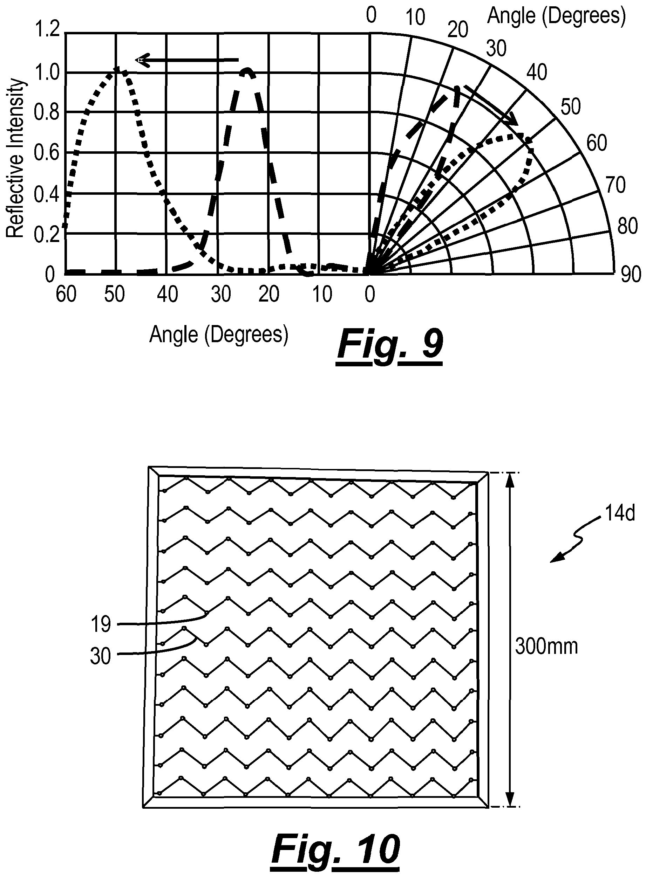

As a result of the introduction of the coating layer 29, the beam angle of the first light output 22 from the lighting panel 14c is increased from 60° to 70° while that of the second light output 23 is increased from 25° to 50°. This effect is further illustrated by the beam profile measurement profile presented in Figure 9, which shows the comparison of the second light output 23 from the lighting panel 14 and 14c presented in Figures 3 and 8. As can clearly be seen, the peak in the angle of distribution from the second light output 23 increases from 25° to 50°, as a result of the inclusion of the coating layer 29.

It is preferable that the coating layer 29 is added to the prism structures 17, so as to form a substantially planar surface. As a result, the second light output 23 is refracted by the combination of the prism structures 17 and the coating layer 29, and not just the coating layer 29 as may be expected to the non-informed observer. A further advantage of employing the coating layer 29 to form a substantially planar surface, is that such a surface is less likely to collect dirt or dust when compared to that of the prism structures 17 in isolation.

As will be appreciated by the skilled reader, the refractive index of the coating layer 29 can be selected so as to achieve the desired output angles for the beams 22 and 23, and may of course be employed in conjunction with the reflective layer 24, as previously discussed with reference to Figure 6. In practice, it is found that patterning of the coating layer 29 or controlling its depth can provide further control to the output angles for the beams 22 and 23. An example of such a patterned transparent coating layer 29b is presented in Figure 8(b). The spatially pattern is a chequered square pattern which acts to providing two components to both the first 22 and second 23 output beams. The resulting light intensity distribution is therefore a superposition of these two components of the first 22 and second 23 output beams, thus providing a further method for determining the final profile and angle of the light beams. It will be appreciated by the skilled reader that other regular and irregular patters may be adopted by the patterned transparent coating layer 29b e.g. lines or stripes.

In order to demonstrate the scalability of this device Figure 10 presents a top view of a commercial lighting panel 14d in accordance with an example of the present invention. The lighting panel 14d is based on a 300mm square section of a Vikuiti™ brightness enhancement film (BEF III) which performs the function of the transparent substrate 15 and the transparent prism structures 17. Located on the second surface 18 of the substrate 15 are one hundred and seventy six Nichia® 206 LEDs 19. Electrical tracking 30 is located on the second surface 18 of the substrate 15, and provides a means for supplying electrical power to the LED 19, as and when appropriate. The guide layer 20 again encapsulates the LEDs 19 on the second surface 18. The lighting panel 14d has an overall thickness of around 2mm.

The above described embodiment and examples provide lighting panels 14, 14b, 14c and 14d that produce narrowed beam angular distributions from wide angle (lambertian) LED sources. This is achieved by the employment of the transparent layer of prism structures 17.

Furthermore, by embedding the LEDs 19 and 26 within the devices 14, 14b, 14c and 14d also provides the added advantage of significantly improving the optical coupling of the light 21 into the guide layer 20. This configuration also allows for the LEDs 19 and 26 to be located anywhere across the first surface 16 of the transparent substrate 15 thus providing a means for significantly reducing the average optical path length of the light 21. The combination of both of these features results in systems that exhibit high optical efficiencies when compared to the lighting panel systems known in the art.

The described structures also have the further advantage in that they enable the use of more stable transparent optical polymers in the vicinity of the LEDs 19 and 26. They also act to distribute the thermal dissipation evenly over the entire area of lighting panels 14, 14b, 14c and 14d, rather than just at the edges as found within the edge coupled prior art systems, see Figure 2. Both of these features act in combination to provide LED lighting panels 14, 14b, 14c and 14d which exhibits significantly longer operating lifetimes than those known in the art.

The above embodiment and examples have all been described with reference to the employment of 90° prism 1-dimensional structures 17. It will however be appreciated by the skilled reader that other angled prism structures could equally well be employed. Different output beam profiles and angle widths can also be obtained by employing different shaped prism structures, for example, lenses, micro-lenses, 2-dimensional prism pyramid structures or saw-tooth (asymmetric prisms), holographic and other diffractive or refractive structures. These can have a regular distribution or random distribution.

A further advantage of the above described lighting panels 14, 14b, 14c and 14d, is that narrow beam widths can be achieved from a wide beam angle light source 19 and 26 in a very thin device in a direction generally perpendicular or off-axis compared to the direction of the light emitted from the LED sources 19 and 26. The described lighting panels 14, 14b, 14c and 14d, have typical thicknesses of around 2 mm. This allows for thin lighting panels to have directed and focused light delivery without any additional external components, such as beam control films being required. This acts to significantly improve the optical efficiency, reduce system costs and ease of manufacture, integration and installation. By way of example, in room lighting, a panel deployed as a thin layer on the floor can produce a focused beam efficiency delivered up onto an adjacent wall. Previously, thick and bulky spotlight types of devices, as presented in Figure 1, would be required to produce the required focused beam and required optical efficiency.

In addition, the described devices 14, 14b, 14c and 14d can be given added functionality by adding a coating layer 29 onto the light extraction surface features17, which then function to modify the output beam angle of the output light 22, 23 and 27. This layer 29 is selected to have a lower refractive index than the surface extraction features 17, but higher than that of air and so acts to increase the angle of distribution from the normal direction. The benefit of this approach is that it gives an easy manufacturing control of the output beam angles for a fixed substrate surface feature in the light panel structure. This avoids the costly requirement of producing a new light extracting feature design (prisms with different angles) for each required product beam angle.

A lighting panel that provide an alternative means for producing a "spot light" like illumination from an LED is described. The lighting panel comprising a transparent substrate upon a first surface of which are mounted a plurality of transparent prism structures and upon a second surface of which is mounted a light emitting diode (LED). A transparent guide layer is arranged so as to encapsulate the light emitting diode upon the second surface such that the transparent base substrate and the transparent guide light form a composite structure for guiding light emitted from the LED. The transparent prism structures are configured to extract a first and a second light output from the lighting panel, the first and second light outputs having output angles and beam widths determined by the structure of the plurality of transparent prism structures. The lighting panels exhibit high optical efficiencies and long operating lifetimes.

The foregoing description of the invention has been presented for purposes of illustration and description and is not intended to be exhaustive or to limit the invention to the precise form disclosed. The described embodiments were chosen and described in order to best explain the principles of the invention and its practical application to thereby enable others skilled in the art to best utilise the invention in various embodiments and with various modifications as are suited to the particular use contemplated. Therefore, further modifications or improvements may be incorporated without departing from the scope of the invention as defined by the appended claims.

## Claims

1. A lighting panel (14c) comprising a transparent substrate (15) upon a first surface (16) of which are mounted a plurality of transparent prism structures (17) and upon a second surface (18) of which is mounted a light emitting diode (LED) (19), and a transparent guide layer (20), the transparent guide layer (20) being arranged so as to encapsulate the LED (19) upon the second surface (18) such that the transparent substrate (15) and the transparent guide layer (20) form a composite structure for guiding light emitted from the LED (19), wherein the plurality of transparent prism structures (17) are configured to extract a first (22) and a second (23) light output from opposite sides of the lighting panel (14c), the first (22) and second (23) light outputs having output angles and beam widths determined by the plurality of transparent prism structures (17), wherein the lighting panel (14c) further comprises a transparent coating layer (29) applied to the plurality of transparent prism structures (17), wherein the first light output (22) exits the lighting panel (14c) through the transparent coating layer (29) where it is applied, wherein the refractive index of the transparent coating layer (29) is less than the refractive index of the transparent prism structures (17), and wherein the refractive index of the transparent coating layer (29) provides a further means for determining the output angles of the first (22) and second (23) light outputs.

2. A lighting panel (14c) as claimed in claim 1 wherein the transparent coating layer (29) is applied to the plurality of transparent prism structures (17) to form a substantially planar surface.

3. A lighting panel (14c) as claimed claim 1 or claim 2 wherein the transparent coating layer (29b) comprises a spatial pattern.

4. A lighting panel (14c) as claimed in any of the preceding claims wherein the plurality of transparent prism structures (17) are configured to compress the light emitted from the LED (19).

5. A lighting panel (14) as claimed in any of the preceding claims wherein the lighting panel further comprises a reflector (24) arranged so as to reflect the first light output (22) back through the composite structure.

6. A lighting panel (14) as claimed in claim 5 wherein the reflector (24b) comprises an array of apertures (25).

7. A lighting panel (14) as claimed in claim 5 or claim 6 wherein the reflector (24,24b) comprises a transparent film and a plurality of patterned reflective or optical features.

8. A lighting panel (14b) as claimed in any of the preceding claims wherein the lighting panel (14b) further comprises a second LED (26) mounted upon the second surface (18) of the transparent substrate (15) such that light emitted from the second LED (26) is guided through the composite structure in a separate or opposite direction to that of the light emitted by the first LED (19).

9. A lighting panel (14c) as claimed in any of the preceding claims wherein the transparent substrate (15) has a refractive index nₛ between 1.50 and 1.66, and/or wherein the transparent prism structures (17) have a refractive index nₚ between 1.46 and 1.58, and/or wherein the transparent guide layer (20) has a refractive index n_{g} between 1.46 and 1.56, and/or wherein the transparent coating layer (29) has a refractive index n_{c} between 1.37 and 1.58.

10. A lighting panel (14c) as claimed in claim 9 wherein the refractive indices of the transparent substrate (15) and the transparent prism structures (17) are selected such that they satisfy the inequality nₛ ≥ nₚ, and/or wherein the refractive indices of the transparent substrate (15) and the transparent guide layer (20) are selected such that they satisfy the inequality nₛ ≥ n_{g}.

11. A method of producing a lighting panel (14c) the method comprising:
- mounting a plurality of transparent prism structures (17) onto a first surface (16) of a transparent substrate (15);
- mounting an LED (19) onto a second surface (18) of the transparent substrate (15);
- adding a transparent guide layer (20) to the second surface (18) so as to encapsulate the LED (19) upon the second surface (18), such that the transparent substrate (15) and the transparent guide layer (20) form a composite structure for guiding light emitted from the LED (19);
- configuring the mounted plurality of transparent prism structures (17) so as to extract a first (22) and a second (23) light output from opposite sides of the lighting panel (14c), the first (22) and second (23) light outputs having output angles and beam widths determined by the plurality of transparent prism structures (17), defined by:
- applying a transparent coating layer (29) to the plurality of transparent prism structures (17), wherein the first light output (22) exits the lighting panel (14c) through the transparent coating layer (29) where it is applied, wherein the refractive index of the transparent coating layer (29) is less than the refractive index of the transparent prism structures (17), and wherein the refractive index of the transparent coating layer (29) provides a further means for determining the output angles of the first (22) and second (23) light outputs.

12. A method of producing a lighting panel (14c) as claimed in claim 11 wherein the transparent coating layer (29) is applied to the plurality of transparent prism structures (17) to form a substantially planar surface.

13. A method of producing a lighting panel (14) as claimed in claim 11 or claim 12 wherein the method further comprises arranging a reflector (24) so as to reflect the first light output (22) back through the composite structure.

14. A method of producing a lighting panel (14b) as claimed in any of claims 11 to 13 wherein the method further comprises mounting a second LED upon the second surface of the transparent substrate such that light emitted from the second LED is guided through the composite structure in a separate or opposite direction to that of the light emitted by the first LED.

## Patentansprüche

1. Eine Beleuchtungsplatte (14c), die ein transparentes Substrat (15) umfasst, auf dessen erster Oberfläche (16) mehrere transparente Prismastrukturen (17) angebracht sind und auf dessen zweiter Oberfläche (18) eine Leuchtdiode (LED) (19) angebracht ist, und eine transparente Führungsschicht (20), wobei die transparente Führungsschicht (20) so angeordnet ist, dass sie die LED (19) auf der zweiten Oberfläche (18) einkapselt, so dass das transparente Substrat (15) und die transparente Führungsschicht (20) eine Verbundstruktur zum Leiten von Licht bilden, das von der LED (19) emittiert wird, wobei die mehreren transparenten Prismastrukturen (17) so konfiguriert sind, dass sie eine erste (22) und eine zweite (23) Lichtabgabe von gegenüberliegenden Seiten der Beleuchtungsplatte (14c) extrahieren, wobei die erste (22) und die zweite (23) Lichtabgabe Ausgangswinkel und Strahlbreiten haben, die durch die mehreren transparenten Prismastrukturen (17) bestimmt werden, wobei die Beleuchtungsplatte (14c) zudem eine transparente Überzugsschicht (29) umfasst, die auf die mehreren transparenten Prismastrukturen (17) aufgebracht ist, wobei die erste Lichtabgabe (22) die Beleuchtungsplatte (14c) durch die transparente Überzugsschicht (29) verlässt, wo diese aufgebracht ist, wobei der Brechungsindex der transparenten Überzugsschicht (29) geringer ist als der Brechungsindex der transparenten Prismastrukturen (17) und wobei der Brechungsindex der transparenten Überzugsschicht (29) ein weiteres Mittel zur Bestimmung der Ausgangswinkel der ersten (22) und der zweiten (23) Lichtabgabe darstellt.

2. Eine Beleuchtungsplatte (14c) nach Anspruch 1, wobei die transparente Überzugsschicht (29) so auf die mehreren transparenten Prismastrukturen (17) aufgebracht ist, dass eine im Wesentlichen ebene Oberfläche entsteht.

3. Eine Beleuchtungsplatte (14c) nach Anspruch 1 oder Anspruch 2, wobei die transparente Überzugsschicht (29b) ein räumliches Muster umfasst.

4. Eine Beleuchtungsplatte (14c) nach einem der vorhergehenden Ansprüche, wobei die mehreren transparenten Prismastrukturen (17) so konfiguriert sind, dass sie das von der LED (19) emittierte Licht komprimieren.

5. Eine Beleuchtungsplatte (14) nach einem der vorhergehenden Ansprüche, wobei die Beleuchtungsplatte zudem einen Reflektor (24) umfasst, der so angeordnet ist, dass er die erste Lichtabgabe (22) durch die Verbundstruktur zurück reflektiert.

6. Eine Beleuchtungsplatte (14) nach Anspruch 5, wobei der Reflektor (24b) eine Anordnung von Öffnungen (25) umfasst.

7. Eine Beleuchtungsplatte (14) nach Anspruch 5 oder Anspruch 6, wobei der Reflektor (24, 24b) einen transparenten Film und mehrere gemusterte reflektierende oder optische Merkmale umfasst.

8. Eine Beleuchtungsplatte (14b) nach einem der vorhergehenden Ansprüche, wobei die Beleuchtungsplatte (14b) zudem eine zweite LED (26) umfasst, die auf der zweiten Oberfläche (18) des transparenten Substrats (15) angebracht ist, so dass von der zweiten LED (26) emittiertes Licht in einer separaten oder entgegengesetzten Richtung zu der des von der ersten LED (19) emittierten Lichts durch die Verbundstruktur geleitet wird.

9. Eine Beleuchtungsplatte (14c) nach einem der vorhergehenden Ansprüche, wobei das transparente Substrat (15) einen Brechungsindex nₛ zwischen 1,50 und 1,66 hat und/oder wobei die transparenten Prismastrukturen (17) einen Brechungsindex nₚ zwischen 1,46 und 1,58 haben und/oder wobei die transparente Führungsschicht (20) einen Brechungsindex n_{g} zwischen 1,46 und 1,56 hat und/oder wobei die transparente Überzugsschicht (29) einen Brechungsindex n_{c} zwischen 1,37 und 1,58 hat.

10. Eine Beleuchtungsplatte (14c) nach Anspruch 9, wobei die Brechungsindizes des transparenten Substrats (15) und der transparenten Prismastrukturen (17) so gewählt sind, dass sie die Ungleichung nₛ ≥nₚ erfüllen, und/oder wobei die Brechungsindizes des transparenten Substrats (15) und der transparenten Führungsschicht (20) so gewählt sind, dass sie die Ungleichung nₛ ≥ n_{g} erfüllen.

11. Ein Verfahren zur Herstellung einer Beleuchtungsplatte (14c), wobei das Verfahren Folgendes umfasst:
- Anbringung mehrerer transparenter Prismastrukturen (17) auf einer ersten Oberfläche (16) eines transparenten Substrats (15);
- Anbringung einer LED (19) auf einer zweiten Oberfläche (18) des transparenten Substrats (15);
- Hinzufügen einer transparenten Führungsschicht (20) zur zweiten Oberfläche (18), so dass die LED (19) auf der zweiten Oberfläche (18) eingekapselt wird, so dass das transparente Substrat (15) und die transparente Führungsschicht (20) eine Verbundstruktur zum Leiten von Licht bilden, das von der LED (19) emittiert wird;
- Konfiguration der angebrachten mehreren transparenten Prismastrukturen (17), um eine erste (22) und eine zweite (23) Lichtabgabe von gegenüberliegenden Seiten der Beleuchtungsplatte (14c) zu extrahieren, wobei die erste (22) und die zweite (23) Lichtabgabe Ausgangswinkel und Strahlbreiten haben, die durch die mehreren transparenten Prismastrukturen (17) bestimmt werden, definiert
durch:
- Aufbringen einer transparenten Überzugsschicht (29) auf die mehreren transparenten Prismastrukturen (17), wobei die erste Lichtabgabe (22) die Beleuchtungsplatte (14c) durch die transparente Überzugsschicht (29) verlässt, wo diese aufgebracht ist, wobei der Brechungsindex der transparenten Überzugsschicht (29) geringer ist als der Brechungsindex der transparenten Prismastrukturen (17) und wobei der Brechungsindex der transparenten Überzugsschicht (29) ein weiteres Mittel zur Bestimmung der Ausgangswinkel der ersten (22) und der zweiten (23) Lichtabgabe darstellt.

12. Ein Verfahren zur Herstellung einer Beleuchtungsplatte (14c) nach Anspruch 11, wobei die transparente Überzugsschicht (29) so auf die mehreren transparenten Prismastrukturen (17) aufgebracht wird, dass eine im Wesentlichen ebene Oberfläche entsteht.

13. Ein Verfahren zur Herstellung einer Beleuchtungsplatte (14) nach Anspruch 11 oder Anspruch 12, wobei das Verfahren zudem das Anordnen eines Reflektors (24) umfasst, um die erste Lichtabgabe (22) durch die Verbundstruktur zurück zu reflektieren.

14. Ein Verfahren zur Herstellung einer Beleuchtungsplatte (14b) nach einem der Ansprüche 11 bis 13, wobei das Verfahren zudem die Anbringung einer zweiten LED auf der zweiten Oberfläche des transparenten Substrats umfasst, so dass von der zweiten LED emittiertes Licht in einer separaten oder entgegengesetzten Richtung zu der des von der ersten LED emittierten Lichts durch die Verbundstruktur geleitet wird.

## Revendications

1. Un panneau lumineux (14c) comprenant un substrat transparent (15) sur une première surface (16) sur laquelle sont montées plusieurs structures prismatiques transparentes (17) et sur une deuxième surface (18) sur laquelle est montée une diode électroluminescente (LED) (19), et une couche de guidage transparente (20), la couche de guidage transparente (20) étant disposée de manière à encapsuler la LED (19) sur la deuxième surface (18) de sorte que le substrat transparent (15) et la couche de guidage transparente (20) forment une structure composite pour guider la lumière émise par la LED (19), dans lequel les différentes structures prismatiques transparentes (17) sont configurées pour extraire une première (22) et une deuxième (23) émission de lumière des côtés opposés du panneau lumineux (14c), les première (22) et deuxième (23) émissions de lumière présentant des angles d'émission et des largeurs de faisceau déterminés par les différentes structures prismatiques transparentes (17), dans lequel le panneau lumineux (14c) comprend en outre une couche de revêtement transparente (29) appliquée sur les différentes structures prismatiques transparentes (17), dans lequel la première lumière (22) est émise par le panneau lumineux (14c) à travers la couche de revêtement transparente (29) appliquée, dans lequel l'indice de réfraction de la couche de revêtement transparente (29) est inférieur à l'indice de réfraction des structures prismatiques transparentes (17) et dans lequel l'indice de réfraction de la couche de revêtement transparente (29) fournit un moyen supplémentaire de déterminer les angles d'émission des première (22) et deuxième (23) émissions de lumière.

2. Le panneau lumineux (14c) de la revendication 1, dans lequel la couche de revêtement transparente (29) est appliquée sur les différentes structures prismatiques transparentes (17) pour former une surface sensiblement plane.

3. Le panneau lumineux (14c) de la revendication 1 ou de la revendication 2, dans lequel la couche de revêtement transparente (29b) comprend un motif spatial.

4. Le panneau lumineux (14c) de l'une des revendications précédentes, dans lequel les différentes structures prismatiques transparentes (17) sont configurées pour comprimer la lumière émise par la LED (19).

5. Le panneau lumineux (14) de l'une des revendications précédentes, comprenant en outre un réflecteur (24) disposé de manière à réfléchir la première émission de lumière (22) à travers la structure composite.

6. Le panneau lumineux (14) de la revendication 5, dans lequel le réflecteur (24b) comprend un réseau d'ouvertures (25).

7. Le panneau lumineux (14) de la revendication 5 ou de la revendication 6, dans lequel le réflecteur (24, 24b) comprend un film transparent et plusieurs éléments à motifs réfléchissants ou optiques.

8. Le panneau lumineux (14b) de l'une des revendications précédentes, comprenant en outre une deuxième LED (26) montée sur la deuxième surface (18) du substrat transparent (15) de sorte que la lumière émise par la deuxième LED (26) est guidée à travers la structure composite dans une direction séparée ou opposée à celle de la lumière émise par la première LED (19).

9. Le panneau lumineux (14c) de l'une des revendications précédentes, dans lequel le substrat transparent (15) présente un indice de réfraction nₛ compris entre 1,50 et 1,66, et/ou dans lequel les structures prismatiques transparentes (17) présentent un indice de réfraction nₚ compris entre 1,46 et 1,58, et/ou dans lequel la couche de guidage transparente (20) présente un indice de réfraction n_{g} compris entre 1,46 et 1,56, et/ou dans lequel la couche de revêtement transparente (29) présente un indice de réfraction n_{c} compris entre 1,37 et 1,58.

10. Le panneau lumineux (14c) de la revendication 9, dans lequel les indices de réfraction du substrat transparent (15) et des structures prismatiques transparentes (17) sont choisis de manière à satisfaire l'inégalité ns ≥ np, et/ou dans lequel les indices de réfraction du substrat transparent (15) et de la couche de guidage transparente (20) sont choisis de manière à satisfaire l'inégalité ns ≥ ng.

11. Un procédé de production d'un panneau lumineux (14c) consistant à :
- monter plusieurs structures prismatiques transparentes (17) sur une première surface (16) d'un substrat transparent (15) ;
- monter une LED (19) sur une deuxième surface (18) du substrat transparent (15) ;
- ajouter une couche de guidage transparente (20) sur la deuxième surface (18) de manière à encapsuler la LED (19) sur la deuxième surface (18), de sorte que le substrat transparent (15) et la couche de guidage transparente (20) forment une structure composite pour guider la lumière émise par la LED (19) ;
- configurer les différentes structures prismatiques transparentes montées (17) de manière à extraire une première (22) et une deuxième (23) émission de lumière des côtés opposés du panneau lumineux (14c), les première (22) et deuxième (23) émissions de lumière présentant des angles d'émission et des largeurs de faisceau déterminés par les différentes structures prismatiques transparentes (17), consistant également
à :
- appliquer une couche de revêtement transparente (29) sur les différentes structures prismatiques transparentes (17), dans lequel la première lumière (22) est émise par le panneau lumineux (14c) à travers la couche de revêtement transparente (29) appliquée, dans lequel l'indice de réfraction de la couche de revêtement transparente (29) est inférieur à l'indice de réfraction des structures prismatiques transparentes (17) et dans lequel l'indice de réfraction de la couche de revêtement transparente (29) fournit un moyen supplémentaire de déterminer les angles d'émission des première (22) et deuxième (23) émissions de lumière.

12. Un procédé de production du panneau lumineux (14c) de la revendication 11, dans lequel la couche de revêtement transparente (29) est appliquée sur les différentes structures prismatiques transparentes (17) pour former une surface sensiblement plane.

13. Un procédé de production du panneau lumineux (14) de la revendication 11 ou de la revendication 12, consistant en outre à disposer un réflecteur (24) de manière à réfléchir la première émission de lumière (22) à travers la structure composite.

14. Un procédé de production du panneau lumineux (14b) de l'une des revendications 11 à 13, consistant en outre à monter une deuxième LED sur la deuxième surface du substrat transparent de sorte que la lumière émise par la deuxième LED est guidée à travers la structure composite dans une direction séparée ou opposée à celle de la lumière émise par la première LED.
